# EUROPÄISCHE PATENTSCHRIFT

(11) **EP 0 558 831 B1**
(45) Veröffentlichungstag und Bekanntmachung des Hinweises auf die Patenterteilung: **16.10.1996**
(21) Anmeldenummer: 92202381.7
(22) Anmeldetag: 30.07.1992
(51) Int. Cl.: F16B 35/04, F16B 23/00

(54) **Schraube oder Schraubenbolzen**
Screw or screwbolt
Vis ou boulon à vis

(30) Priorität: 05.03.1992 DE 9202927 U
(43) Veröffentlichungstag der Anmeldung: 08.09.1993
(73) Patentinhaber: GEBU DRAADWARENFABRIEK ING H.G. GEIST B.V., NL-3220 AC Hellevoetsluis (NL)
(72) Erfinder: Broer, Wilfried Reginald Theodoor, NL-3224 AC Hellevoetsluis (NL)
(74) Vertreter: Merkelbach, B.

(56) Entgegenhaltungen:
- EP-A- 0 314 950
- EP-A- 0 356 019
- EP-A- 0 407 856
- DE-U- 9 108 788
- US-A- 3 682 507
- US-A- 5 019 080

## Beschreibung

Die Erfindung betrifft eine Schraube oder einen Schraubenbolzen, mit einem schlanken Schaft, der sich nach einer zentralen Längsachse erstreckt und der mit wenigstens zwei verschiedenen Gewindeteilen versehen ist, wobei wenigstens ein Ende der Schraube oder des Schraubenbolzens mit einem Kopf ausgeführt ist und mit einer Aussparung versehen ist, in die ein Werkzeug eingesteckt werden kann, dies alles in derartiger Weise, daß mit dem Werkzeug die Schraube oder der Schraubenbolzen um die Längsachse gedreht werden kann.

Eine solche Schraube beziehungsweise ein solcher Schraubenbolzen ist beispielsweise aus der deutschen Offenlegungsschrift 34 41 561 bekannt. Mit einer solchen Schraube beziehungsweise einem solchen Schraubenbolzen ist es beispielsweise möglich, verschiedene Teile im gegenseitigen Abstand zu befestigen, wobei für jedes Teil das geeignete Gewinde gewählt werden kann. So kann beispielsweise ein Gewindeteil selbstschneidend ausgeführt sein, um in beispielsweise Holz eingeschraubt zu werden, während ein andere Gewindeteil mit metrischem Gewinde versehen sein kann, um eine Befestigung mit Muttern vornehmen zu können.

Zum Festziehen der Schraube oder des Schraubenbolzens sind daran häufig Mittel vorgesehen, an denen ein Festziehwerkzeug angreifen kann. Zunächst wurden solche Schrauben oder Schraubenbolzen häufig mit einem gewindelosen Teil zwischen den einzelnen Schraubengewindeteilen versehen, welcher gewindelose Teil in derartiger Weise ausgeführt ist, daß damit ein Maulschlüssel in Angriff gebracht werden kann. Darüber hinaus kam es auch vor, daß auf den metrischen Gewindebereich eine oder mehrere Muttern aufgeschraubt werden, mit denen ein Ring- oder Maulschlüssel in Angriff gebracht werden kann. Jedoch kann das Festziehen einer solchen Schraube nur mit einem Maul- oder Ringschlüssel geschehen, was lästig und arbeitsaufwendig ist, während dafür ausreichender Raum um die Schraube herum erforderlich ist.

Zur Verbesserung wurde ein mit einem Kopf ausgeführtes Ende der Schraube oder des Schraubenbolzens mit einer Aussparung versehen, in die beispielsweise die Schneide eines Schraubenziehers oder das Ende eines bekannten Inbusschlüssels eingesteckt werden kann. Jedoch hat sich bei der Arbeit mit einem Schraubenzieher oder einem Inbusschlüssel gezeigt, daß durch die oft hohe Drehmomente das Werkzeug die Aussparung häufig zerstört und unbrauchbar macht, während darüber hinaus die Spitze des Werkzeugs oft während des Festziehens aus der Aussparung rutscht. Dies führt häufig dazu, daß die Schraube oder der Schraubenbolzen nicht vollständig festgezogen werden kann. Und eine Schraube oder ein Schraubenbolzen mit zerstörter Aussparung kann oft nur noch mit größter Anstrengung entfernt werden. Auch dadurch können große Verzögerungen bei der Verwendung solcher Schrauben oder Schraubenbolzen entstehen.
Die Erfindung beabsichtigt die Aufhebung der vorgenannten Nachteile der bekannten Schraube beziehungsweise des bekannten Schraubenbolzens des eingangs genannten Typs. Dazu ist die Aussparung in dem Kopfende der Schraube oder des Schraubenbolzens derartig ausgeführt, daß die Aussparung mehr als vier sich abwechselnde und aneinander anschließende konvexe beziehungsweise konkave Wandteile aufweist, die sich im wesentlichen parallel zu der Längsachse erstrecken. Vorzugsweise gehen die konvexen und konkaven Wandteile allmählich ineinander über. Darüber hinaus ist die Wirkung am aktivsten, wenn die Aussparung sechs sich abwechselnde konvexe und konkave Wandteile aufweist. Die Wandteile weisen, im Vorderansicht, jeweils einen scharfen Rand auf.

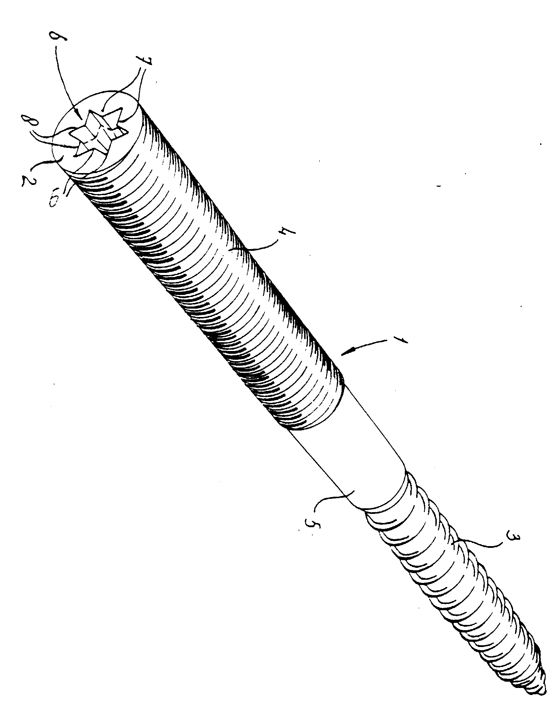

In einer solchen Aussparung nach der Erfindung kann die Spitze eines Werkzeugs mit geeigneter Form eingesteckt werden, womit sehr große Drehkräfte auf die Wandteile der Aussparung übertragen werden können, 3 ohne daß die Gefahr besteht, daß die Aussparung zerstört wird oder ohne daß die Spitze des Werkzeugs aus der Aussparung herausspringt. Wenn die Wandteile allmählich ineinander übergehen, kann die größte Drehkraft aufgetragen werden. Dadurch wird ein zweckmäßiges Festziehen der Schraube oder des Schraubenbolzens nach der Erfindung gewährleistet, um ein Vielfaches besser als mit den bislang bekannten Schrauben oder Schraubenbolzen des in Rede stehenden Typs.
Nach einer Vorzugsausführungsform ist die Schraube oder der Schraubenbolzen mit einem metrischen Gewindeteil und einem selbstschneidenden Gewindeteil versehen. Mit dem selbstschneidenden Teil kann die Schraube leicht in beispielsweise Holz eingeschraubt werden. Mit dem metrischen Gewindeteil kann eine Mutterverbindung realisiert werden.
Nach einer anderen Vorzugsausführungsform befindet sich zwischen zwei Gewindeteilen ein gewindelose Bereich. Dieser gewindelose Bereich kann beispielsweise mit einem Kragen versehen werden. Dadurch kann das Maß, mit dem die Schraube oder der Schraubenbolzen in einen Gegenstand eingeschraubt wird, effektiv beschränkt werden. Auch ist es nach einer anderen Vorzugsausführungsform möglich, den gewindelosen Bereich mit einem Sechskant oder einem anderen Werkzeug-Angriffsmittel zu versehen, eventuell in einem verengten Teil des gewindelosen Bereichs angebracht. Damit kann beispielsweise nach dem Einschrauben mit einem in die Aussparung des Kopfendes eingesteckten Werkzeug eine Feinabstimmung des Maßes des Einschraubens mit beispielsweise einem Ringschlüssel erfolgen. Nach einer weiteren Ausführungsform erstreckt sich der Schaft bis zum Kopfende mit der Aussparung. Dabei kann der Schaft bis zu dessen Enden mit Gewinde versehen sein. Trotz des Umstands, daß dadurch die Oberfläche des Kopfendes der Schraube wenig Raum für die Aussparung läßt, kann trotzdem eine zweckmäßige Aussparung nach den Kennzeichen der in Rede stehenden Erfindung realisiert werden.
Die Erfindung wird nachstehend im einzelnen anhand der beigefügten Zeichnung beschrieben. Darin wird in der perspektivischen Ansicht eine Schraube nach der in Rede stehenden Erfindung gezeigt.
Bei dieser Schraube 1 erstreckt sich der Schaft in der vollen Länge der Schraube aus und endet an dem als Kopf ausgeführten Ende 2. Der Schaft ist mit einem selbstschneidenden Gewindeteil 3 und einem metrischen Gewindeteil 4 versehen, die voneinander durch einen gewindelosen Teil 5 getrennt sind. Mit dem selbstschneidenden Gewindeteil 3 kann die Schraube beispielsweise in Holz eingeschraubt werden.
In dem als Kopf ausgeführten Ende 2 der Schraube 1 befindet sich eine Aussparung 6, in die die Spitze eines Festziehwerkzeugs eingesteckt werden kann. Diese Aussparung 6 weist sechs konvexe Wandteile 7 und sechs konkave Wandteile 8 auf, die abwechselnd angebracht sind und aneinander anschließend ineinander übergehen. In diese Aussparung 6 kann eine ähnlich gestaltete Spitze eines Werkzeugs eingesteckt werden, um die Schraube um deren Längsachse rotieren zu lassen. Bedingt durch die Form der Wandteile 7, 8 ist es möglich, eine große Drehkraft auf die Schraube auszuüben.
Die Wandteile 7, 8 weisen jeweils einen verhältnismäßig scharfen Rand 9 auf, damit das Werkzeug einem besseren Griff auf die Wandteile hat.
Selbstverständlich beschränkt sich die Erfindung nicht auf das in der Zeichnung dargestellte Ausführungsbeispiel. So kann der Schaft mit anderen Typen von Gewindeteilen versehen sein, beispielsweise mit zwei metrischen Gewindeteilen. Auch kann der Schaft mit mehr als zwei Gewindeteilen versehen sein. Der gewindelose Bereich 5, von dem es mehrere geben kann, kann mit einem Kragen versehen sein, so daß eine stellenweise Verdickung gebildet wird. Dieser Kragen kann Bestandteil von beispielsweise einem Sechskant sein. Auch kann in dem gewindelosen Bereich ein Sechskant durch Verengung angebracht sein. Darüber hinaus kann der Durchmesser des Schafts auf seiner Länge variieren. Schließlich ist es möglich, die Wandteile 7, 8 allmählich ineinander übergehen zu lassen, wodurch immer eine große Drehkraft auf die Schraube ausgeübt werden kann.

Die Erfindung wird deshalb im einzelnen von den beigefügten Schutzansprüchen bestimmt.

## Patentansprüche

1. Schraube oder einen Schraubenbolzen, mit einen schlanken Schaft der sich nach einer zentralen längsachse erstrekt und der mit wenigstens zwei verschiedenen Gewindeteilen versehen ist, wobei wenigstens ein Ende der Schraube oder des Schraubenbolzens mit einem Kopf ausgeführt ist und mit einer Aussparung versehen ist, in die ein Werkzeug eingesteckt werden kann, dies alles in derartiger Weise, daß mit ein Werkzeug die Schraube oder der Schraubenbolzen um die Längsachse gedreht werden kann, dadurch gekennzeichnet, daß die Aussparung (6) mehr als vier sich abwechselnde und einander anschließende konvexe (7) beziehungsweise konkave (8) Wandteile aufweist die sich im wesentlichen parallel zu der Längsachse erstrecken und die Wandteile (7, 8) in Vorderansicht jeweils einen scharfen Rand (9) aufweisen.

2. Schraube oder Schraubenbolzen nach Anspruch 1, wobei die genannten Wandteile (7, 8) allmählich ineinander übergehen.

3. Schraube oder Schraubenbolzen nach Anspruch 1 oder 2, dadurch gekennzeichnet, daß die Aussparung sechs sich abwechselnde konvexe und konkave Wandteile aufweist.

4. Schraube oder Schraubenbolzen nach einem der vorhergehenden Ansprüche, wobei der Schaft ein metrisches Gewinde (4) und ein selbstschneidendes Gewinde (3) umfaßt.

5. Schraube oder Schraubenbolzen nach einem der vorhergehenden Ansprüche, wobei sich zwischen wenigstens zwei Gewindeteilen (5) ein gewindeloser Bereich befindet.

6. Schraube oder Schraubenbolzen nach Anspruch 5, wobei wenigstens ein gewindeloser Bereich mit einem Kragen versehen ist.

7. Schraube oder Schraubenbolzen nach einem der vorhergehenden Ansprüche, wobei der gewindelose Bereich (5) mit einem Mittel versehen ist, an dem ein Werkzeug in Angriff gebracht werden kann.

8. Schraube oder Schraubenbolzen nach einem der vorhergehenden Ansprüche, wobei sich der Schaft bis zu dem genannten Kopfende mit der Aussparung erstreckt.

9. Schraube oder Schraubenbolzen nach Anspruch 8, wobei sich das Gewinde bis zum Ende des Schafts sich erstreckt.

## Claims

1. Screw or screw bolt with a slim shaft extending to a central longitudinal axis and equipped with at least two different thread parts, with at least one end of the screw or the screw bolt designed with a head and a recess into which a tool can be introduced, all this in such a manner that the screw or the screw bolt can be turned around its longitudinal axis with the help of a tool, characterized in that the recess (6) has more than four alternating and connecting convex (7) or concave (8) surface parts that are mainly parallel to the longitudinal axis, with each of the surface parts (7, 8) designed with a sharp edge (9) in front view.

2. Screw or screw bolt according to claim 1, characterized in that the surface parts (7, 8) mentioned above run smoothly into each other.

3. Screw or screw bolt according to claim 1 or 2, characterized in that the recess has six alternating convex and concave surface parts.

4. Screw or screw bolt according to one of the preceding claims, characterized in that the shaft comprises a metric thread (4) and a self-cutting thread (3).

5. Screw or screw bolt according to one of the preceding claims, characterized in that a threadless area is interposed between at least two thread parts (5).

6. Screw or screw bolt according to claim 5, characterized in that at least one threadless part comprises a collar.

7. Screw or screw bolt according to one of the preceding claims, characterized in that the threadless part (5) comprises a provision on which a tool can be placed.

8. Screw or screw bolt according to one of the preceding claims, characterized in that the shaft extends to the aforementioned head with the recess.

9. Screw or screw bolt according to claim 8, characterized in that the thread extends to the end of said shaft.

## Revendications

1. Vis ou boulon à vis à tige mince s'étendant à un axe longitudinal central et muni d'au moins deux parties filetées différemment, avec au moins une extrémité de la vis du boulon à vis muni d'une tête avec une cavité dans laquelle on peut introduire un outil, de telle sorte que l'on puisse faire tourner la vis ou le boulon à vis autour de son axe longitudinal à l'aide d'un outil, caracterisé par le fait que la cavité (6) est munie de plus de quatre faces alternées et connectées convexes (7) et concaves (8), essentiellement parallèles à l'axe longitudinal, chacune des faces (7, 8) présentant un bord aigu (9) en vue frontale.

2. Vis ou boulon à vis selon la revendication 1, caracterisé par le fait que les faces (7, 8) susmentionnées s'imbriquent en souplesse les unes dans les autres.

3. Vis ou boulon à vis selon la revendication 1 ou 2, caracterisé par le fait que la cavité présente six faces alternées convexes et concaves.

4. Vis ou boulon à vis selon l'une des revendications précédentes, caracterisé par le fait que la tige comprend un filetage métrique (4) et un filetage taraudeur (3).

5. Vis ou boulon à vis selon l'une des revendications précédentes, caracterisé par le fait qu'une partie intermédiaire sans filetage est présente entre au moins deux parties filetées (5).

6. Vis ou boulon à vis selon la revendication 5, caracterisé par le fait qu'au moins une partie non filetée conçue avec un collier est présente.

7. Vis ou boulon à vis selon l'une des revendications précédentes, caracterisé par le fait que la partie sans filetage (5) est conçue avec la possibilité d'y placer un outil.

8. Vis ou boulon à vis selon l'une des revendications précédentes, caracterisé par le fait que la tige s'étend jusqu'à la tête avec la cavité mentionnée plus haut.

9. Vis ou boulon à vis selon la revendication 8, caracterisé par le fait que le filetage s'étend jusqu'à l'extrémité de la tige.
